# EUROPEAN PATENT SPECIFICATION

(11) **EP 3 747 695 B1**
(45) Date of publication and mention of the grant of the patent: **12.10.2022**
(21) Application number: 18903545.4
(22) Date of filing: 02.02.2018
(51) Int. Cl.: B60P 3/22, B62D 21/12, B62D 21/03, B62D 21/09, B62D 21/20

(54) **MODULAR CHASSIS FOR SEMI-TRAILER AND RIGID TANKS**
MODULARES CHASSIS FÜR SATTELANHÄNGER UND STARRE TANKS
CHÂSSIS MODULAIRE DE CITERNES SEMI-REMORQUE ET RIGIDES

(43) Date of publication of application: 09.12.2020
(73) Proprietor: FARCINOX, S.A., 13620 Pedro Muñoz-Ciudad Real (ES)
(72) Inventor: ORTIZ CICUENDEZ, José, 13620 PEDRO MUÑOZ-CIUDAD REAL (ES)
(74) Representative: Urizar Anasagasti, Jesus Maria
(86) International application number: PCT/ES2018/070080
(87) International publication number: WO 2019/149971

(56) References cited:
- EP-A1- 1 245 476
- DE-U1- 20 311 865
- ES-T3- 2 204 439
- ES-U- 1 093 685
- NL-A- 6 413 399
- US-A1- 2014 060 402
- US-B1- 6 402 199
- US-B1- 7 108 315
- US-B1- 7 108 315

## Description

Modular chassis for semi-trailer and rigid tanks.

### Object of the invention

The object of the invention is a new modular chassis for supporting self-supporting semi-trailer and rigid tanks made with deep drawn stainless steel parts by means of different industrial manufacturing processes.

Deep drawing or stamping is a technological industrial process that consists of manufacturing sheet metal that takes the shape of a die or mould with a positive form by applying a hydraulic force to a punch or ram with the negative form of the part to be drawn. This production technique for parts is used in mass production manufacturing and mainly in the automobile industry. The present invention aims to apply this cutting-edge technology in manufacturing chassis for both rigid and semi-rigid tanks for road transportation of any type of liquid.

### Technical field

The invention falls within the industrial field of manufacturing self-supporting vehicles for the transportation of liquids and powders. It can be applied to the industrial field of freight transportation using new ways of manufacturing the main components, such as the modular chassis of the present invention.

### Background of the invention

A tank is a means for transporting liquid or bulk products that are currently widely used in any type of industry.

Depending on the way in which tanks are manufactured and on the material being transported, they can have a cross section that is cylindrical, elliptical with 4 or 8 radii and longitudinally straight, conical, frustoconical or gooseneck-shaped. They are formed by an elongated cylinder made of carbon steel, stainless steel or aluminium that rests on a chassis, which is the joining piece between the tank and the axles and shock absorbers of the trailer. The chassis is usually the skeleton of the tank, the transition element that absorbs all of the stresses.

The chassis and the joining pieces for the axles of the wheels of the tanks, made of carbon steel or stainless steel, are mainly manufactured in sheet metal that is thoroughly welded to a beam in the form of an inverted H. This mounting process has been the most widely applied up to the present, due to the lack of relevant innovations in the tank manufacturing sector. Tanks are often manufactured with a unique design for each model because they do not share the same chassis. Each welded chassis is different because it depends on the length of the tank and the fact that deformations normally occur in the welding process due to the heat applied to the welding surface. Furthermore, these variations can be a future problem if the tanks are subjected to abrupt temperature changes or alternating intense loads. On the other hand, if the welding is not done properly by qualified workers with good quality control, the weld seams could begin to crack and even lead to a slight fracture, either in the weld seam or in nearby heat-affected zones (HAZ).

There are several documents and published patents about self-supporting tanks, such as document ES2273582A1, which summarises the manufacturing of tanks with a rigidly welded chassis.

Document US 7 108 315 B1 discloses a modular chassis for semi trailer and rigid tanks according to the preamble of claim 1.

### Description of the invention

With new technologies for calculating and simulating the stresses due to finite elements (FEM), the present invention has achieved a manufacturing process for a modular chassis in which deep drawn pieces are screwed together. These deep drawn pieces designed to be mounted and joined together by screws are provided with several folds to provide sufficient rigidity to the assembly.

The chassis on which the axles of the wheels of the tank are mounted, with the corresponding suspension thereof, and on which a series of bracket pairs rest to support the weight of the tank, is made up of the following:
- Two longitudinal members that have a Z-shaped folded profile, which are mounted opposite one another on the respective sides, such that the upper base of said profile is situated towards the outside and, thus, the lower base of this profile is oriented towards the inside of the tank.
- Moreover, brackets have been designed to be mounted on the respective longitudinal members, at least in the areas where the axles of the tank are mounted, and have a Z-shaped profile welded to the lower outer corner with similar dimensions to those of the longitudinal members in order to be able to rest on the same in the assembly.
- In the area where each axle of the tank is mounted, the chassis also has:
   ∘ supports that are mounted on the outer face of the respective longitudinal members;
   ∘ lower supports, attached to the lower base of the respective longitudinal members;
   ∘ a bracing piece, mounted transversely to the respective longitudinal members.

According to an important feature of the invention, both the outer and inner supports, as well as the bracing piece that transversely joins them, are formed by deep drawing and have several folds to increase the rigidity of the assembly; and furthermore, they have several openings by means of which they are screwed together and to the longitudinal members and brackets.

The outer and inner supports, on each side of the tank, define the means for coupling each axle, with the corresponding suspension thereof, and to do so they have facing holes by which they are attached using screw elements, just as the other pieces that make up this chassis.

With the new deep drawn modular chassis, assembled by means of screwed joints, the tank can be mounted on the axles without the need to weld, thereby preventing heating, deformations and residual stresses. It will also facilitate the production method of the tanks, since the same chassis can be used for several tank models and a flexible and modular system can be achieved which, at the same time, optimises production and reduces delivery times.

These types of deep drawn and screwed constructions have different advantages because they homogenise the assembly line, eliminate the need for subsequent welding inspections and make it possible to manufacture and deliver tanks in countries in which there is a lack of qualified labour. The main drawback is the large investment in technology that must be made to design and manufacture the deep drawing moulds and to introduce several stamping presses in the assembly line.

The main advantage of this new chassis made with deep drawn pieces is its universality and the high degree of automated work on the production line. The screwed chassis will require simpler final assembly lines and it will eliminate the need for certain inherent quality control tests on welded joints.

This invention is based on the use of deep drawn pieces to produce a chassis for transportation tanks. The chassis herein described is made of martensitic stainless steel, but it could be made of other stainless steels, such as duplex stainless steel, or standard carbon steel or aluminium, or carbon steel or aluminium with a high elastic limit.

This stainless steel chassis is able to have a lower total weight compared to a welded chassis. This way, the chassis-tank assembly will be more efficient because it will be able to transport a larger amount of the product. This is one of the main advantages of this chassis. Manufacturing pieces that are in the most vulnerable areas of the structure by means of deep drawing and folds increase their resistance and, moreover, their thickness can be reduced in certain areas.

Another main advantage is the ease with which the chassis can be repaired if there is a collision or deformation, the damaged pieces being quickly replaced. With current designs, if there is an accident, the tank must be taken back to the metal fabrication facility in order for the damaged elements to be cut and welded again, with the expenses that this process entails. Using this deep drawn-screwed chassis, it would only be necessary to disassemble the damaged piece and assemble the correct piece, which can be sent to any location where the cistern is located, since it would only be necessary to have the proper dynamometric keys to do the repair in the case of an accident.

Likewise, to export tanks to international markets, it will be more economic to transport the disassembled tank in standard containers and assemble it by screwing all of the pieces in the place of origin. This invention can be used for rigid tanks joined to a lorry, as well as for semitrailers.

The dynamic behaviour of this deep drawn-screwed chassis has been tested and simulated both with finite elements and in real field tests in extreme load conditions and taking into account different aspects such as turn radii of secondary roads, roundabouts, bumps or wheels coming loose, all which can occur during the transportation of liquids, in addition to other adverse circumstances that could occur.

The new invention provides a great deal of flexibility on the assembly line of the tank, reduces the net weight of the entire assembly of the tank and makes it easy to replace pieces of the assembly in future repairs.

### Description of the figures

As a complement to the description provided herein, and for the purpose of helping to make the features of the invention more readily understandable, the present specification is accompanied by a set of drawings which, by way of illustration and not limitation, represent the following:
Figure 1 shows a complete view of the deep drawn-screwed modular chassis in an isometric view, indicating all the new pieces with the described numbering.

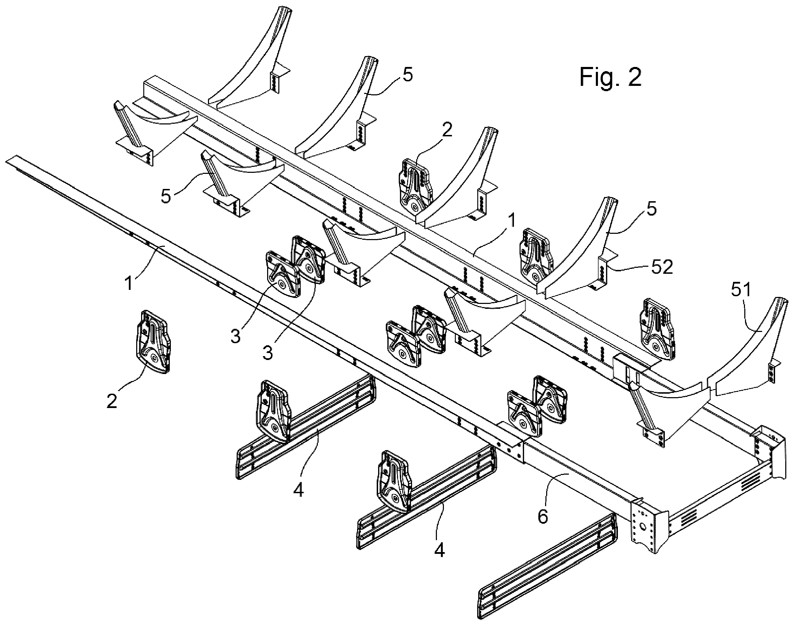

Figure 2 shows an exploded view of the modular chassis showing each of the pieces in detail. It shows the drilled holes on the Z-shaped longitudinal member (1), on the brackets (5) and on the deep drawn supports (2, 3), which will be screwed with the appropriate tightness to work together.
Figure 3 shows a detailed view of the tank (7) joined to the chassis. In this case the barrel (tank) is joined to the Z-shaped chassis and to the supports by means of the brackets. The stress distribution can be seen in the described figure. With this deep drawn-screwed chassis, the stresses do not fall on the main beam, but are rather redistributed to the supports of the axles, and this way it is possible to reduce the weight of the chassis.
Figure 4 shows the three deep drawn pieces that make up this new chassis: supports (2,3) and bracing piece (4). The ribs, folds and tabs made with a press stroke to increase the rigidity of the assembly are shown.

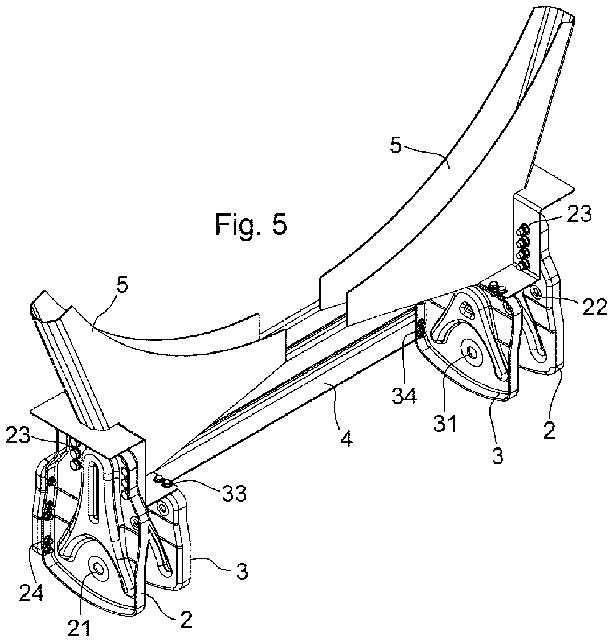

Figure 5 shows the three deep drawn pieces that make up this new chassis: supports (2,3) and bracing piece (4), as well as the brackets (5) from the opposite side of that of the preceding figure.

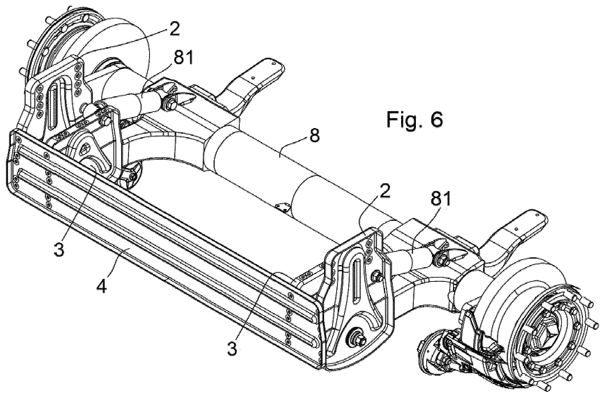

Figure 6 shows the three deep drawn pieces that make up this new chassis together with the main axle (8), showing the joints joining the axle to the pieces (5.2) and the joints joining the pieces to the shock absorber of the main axle (5.1).

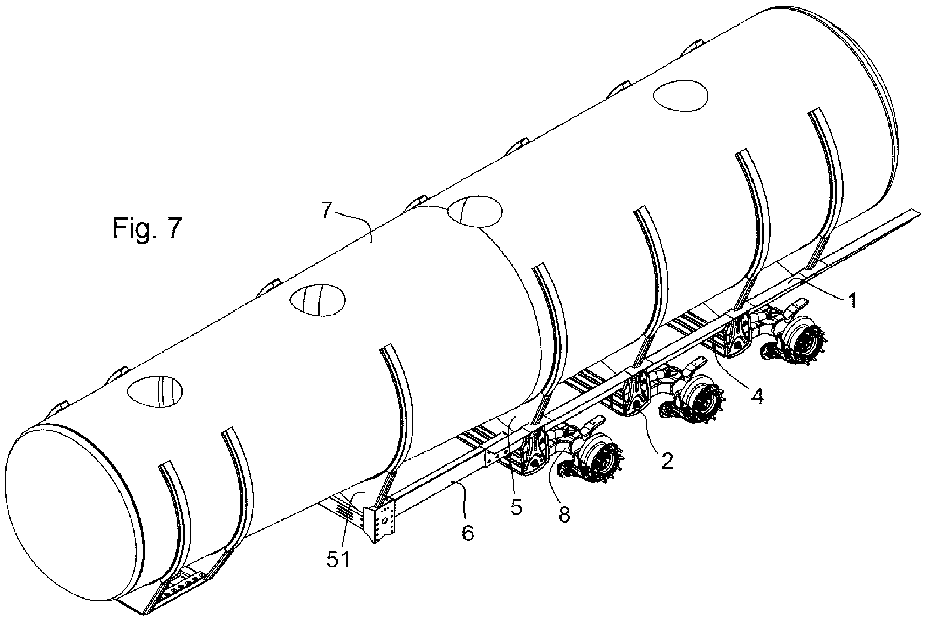

Figure 7 is a perspective view of the complete tank with the new deep drawn-screwed modular chassis.

### Preferred embodiment of the invention

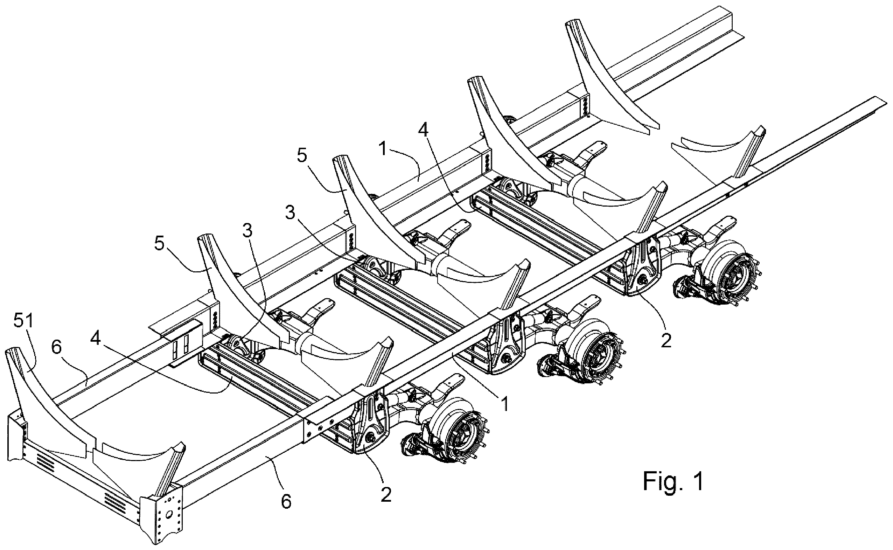

As can be seen in Figure 1, this chassis is made up of 5 basic pieces: The longitudinal members (1), the outer (2) and inner (3) supports, the bracing pieces (4) and the brackets (5). Lastly, the sub-chassis (6) is joined at the front of the actual chassis to extend the same to the first bracket (51) of the tank.

The longitudinal members (1), as indicated by their name, are two lateral beams that are installed on both sides of the tank (7), on which the brackets (5) rest and to which they are screwed; and they, therefore, constitute the transition piece between the tank (7) and the axles (8) of the wheels. Each one of these longitudinal members (1) consists of a Z-shaped profile, folded with a variable inclination to absorb the slight inclination of approximately 1° of the tank. The assembly thereof is done in opposite ways on the respective sides, such that the upper base of said profile is situated towards the outside and, thus, the lower base of this profile is oriented towards the inside of the tank, on both sides. The Z-shaped profile is manufactured using methods that allow for total precision: it is cut by laser, including all of the holes by numeric control, and it is folded with the mentioned inclination, the supports then being mounted to it by means of metric screw elements. Each one of them has an approximate length of between 5.5 and 6 m, depending on the tank model.

On the front part of these Z-shaped profiles, a series of openings has been included to screw in the sub-chassis (6), to which the support feet for levelling the tank are screwed. The toolboxes of the tank which can house different pumps and components will also be screwed to the rear part of this Z-shaped profile.

The outer supports (2) are attached to the outer part of the Z-shaped profile that makes up the longitudinal members (1), in the positions in which each axle (8) of the tank is placed; for this purpose, it incorporates a series of drilled holes (23) to screw the support (2) to the longitudinal member (1) and to the bracket (5). The sides also have a series of drilled holes (24) through which the bracing piece (4) is screwed, which transversely and rigidly joins both longitudinal members (1). In turn, it also has suitable drilled holes (21) (22), respectively, to screw in the axle (8) and the shock absorber (81) of the tank. It is a deep drawn piece, in which ribs (25) are defined, which are also deep drawn, which provide it with the necessary rigidity in intense bending or twisting moments when the tank is loaded and sharp turns or other manoeuvres are made.

The inner supports (3) are attached to the lower face of the Z-shaped profile that makes up the longitudinal members (1), in correspondence with the outer supports (2), for which it has upper drilled holes (33) to be screwed to the base of the Z-shaped profile, to screw the support (3) to the longitudinal member (1) and to the bracket (5). The sides also have drilled holes (34) through which the bracing piece (4) is screwed, which transversely and rigidly joins both longitudinal members (1). In turn, it also has drilled holes (31) (32) to screw in the axle (8) and the shock absorber (81) of the axle, respectively. As shown in the figures, this piece is also made by deep drawing and has a central deep drawn channel (35) to increase rigidity.

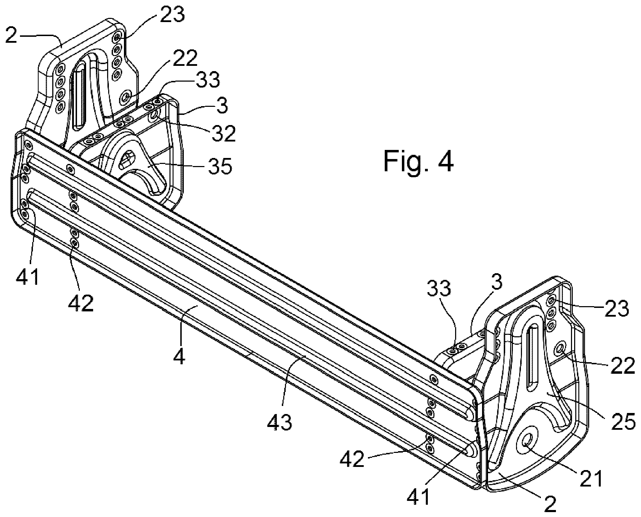

The bracing piece (4) is a deep drawn piece that joints the two longitudinal members (1), while at the same time joining the outer (2) and inner (3) supports of both sides of the chassis to each other. This is an essential piece that distributes the torsional stresses from the tyres to the barrel, especially when sharp turns are made with a full tank. It is joined by screws and has central ribs (43) that provide it with stability for occasional compressive stresses. As shown in Figure 4, this piece is joined to the outer support (2) by means of the holes (41) and to the inner support (3) by the holes (42).

The bracket (5), a term commonly used by tank manufacturers, in this case has a modification, since it includes a folded plate (52) with a series of holes for screwing the bracket assembly to the Z-shaped longitudinal members (1). This piece forms part of the main body of the tank and is welded to the reinforcement ring with a common omega profile.

The piece joining the chassis to the first bracket of the tank (51) is commonly known as the sub-chassis (6). This piece houses the support feet of the tank at times when the tank is stationary and separated from the lorry. In this deep drawn-screwed modular chassis, this piece is made with a C-shape folded profile and is screwed to the main chassis.

In the construction of the chassis of the present invention, made up of deep drawn pieces and screwed joints, special screws are used with incorporated washers, as well as high resistance nuts with an incorporated serrated washer to penetrate the material being screwed together. All of these components are tightened with the necessary tightening torque for the stipulated stainless screws, and likewise, the diameter of the holes is manufactured according to European standards. Ensuring proper tightening of the screw will make it unnecessary to worry about possible fractures of welded areas or heated areas affected by variations in ambient temperature.

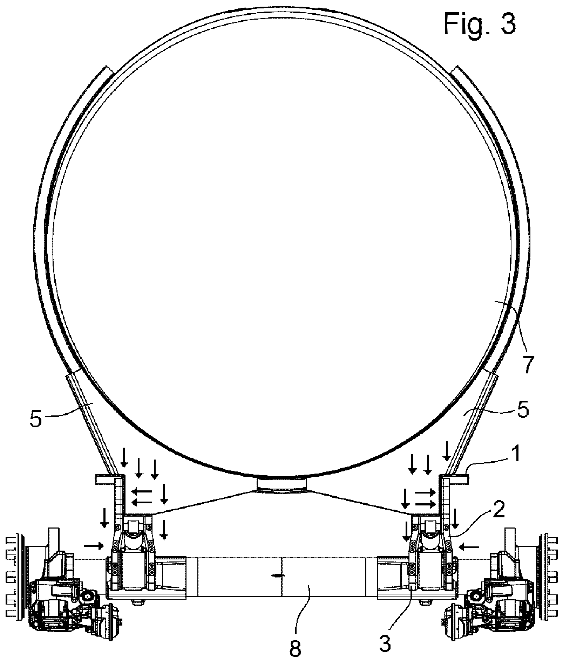

As shown in Figure 3, the Z-shaped longitudinal members of this chassis do not absorb all the stresses of the barrel, as occurs in all welded chassis, rather the bracket (5) is joined to the Z-shaped chassis (1) and to the outer support (2). This structural change optimises stress distribution, distributing stresses directly from the supports (2, 3) of the axles to the barrel itself by means of the brackets (5). Thus, the longitudinal members (1) have less of a structural function, providing longitudinal bracing of the supports of the axles. This prevents these pieces from breaking in unfavourable conditions, such as turn or bumps when the tank is full. The redistribution of stresses can be seen by the arrows in Figure 3.

To mount the modular chassis of the invention, the brackets (5), on which the tank will be mounted, must first be mounted, the tank supported by the Z-shaped profile of both longitudinal members (1). The supports (2) and (3) are then mounted and the axle (8), along with the incorporated shock absorber (81), is mounted between them. The same screws that pass through the row of openings (23) join the folded piece (52) of the brackets (5), the longitudinal member (1) and the support (2).

Then, the main axle is attached between the supports (2) and (3) and these supports are joined to the bracing piece (4), which joins the two longitudinal members (1) on the lower part, absorbing all the torsional stresses that may hinder the structure, by means of screws that pass through the side holes (41) (42) of these pieces.

This assembly will be repeated in each one of the axles incorporated by the semi-trailer, and later the sub-chassis with the feet for supporting the tank will be mounted, followed by the attached boxes and accessories.

Having sufficiently described the nature of the invention, in addition to a preferred exemplary embodiment, it is hereby stated for the relevant purposes that the materials, shape, size and layout of the described elements may be modified, provided that it does not imply altering the essential features of the invention claimed below.

## Claims

1. A modular chassis for semi-trailer and rigid tanks, on which the axles (8) of the wheels of the tank (7) are mounted, and on which a series of bracket pairs (5) rest to support the weight of the tank (7), **comprising:**
- longitudinal members (1) constituting the transition piece for the stresses of the tank to the supports (2, 3) of the chassis, formed by a Z-shaped folded profile, which are mounted opposite one another on the respective sides, such that the upper base of said profile is situated towards the outside and, thus, the lower base of this profile is oriented towards the inside of the tank, which have a series of holes suitable for screwing in the elements that make up the chassis;
- brackets (5), mounted on the respective longitudinal members (1);
- outer supports (2), mounted on the outer face of the respective longitudinal members (1), the modular chassis being **characterised in that**:
- the brackets are coinciding with each axle (8) of the tank, which have on the lower outer corner thereof a welded Z-shaped folded plate (52) with similar dimensions to those of the longitudinal members (1), provided with several holes suitable for screwing them to said longitudinal members (1) and to the supports (2, 3) of the chassis;
- the outer supports are mounted in the area where each axle (8) of the tank is mounted, formed by a deep drawn piece, provided with a series of holes by means of which they are screwed to the longitudinal members (1) and to the bracket (5), to the axle (8) and the shock absorber (81) of the same and also to a bracing piece (4), forming, along with the inner supports (3), means for coupling each axle (8), with the corresponding suspension (81) thereof;
- inner supports (3), mounted on the lower base of the respective longitudinal members (1), in the area where each axle (8) of the tank is mounted, formed by a deep drawn piece which has a series of holes by means of which they are screwed to the longitudinal members (1) and to the bracket (5), to the axle (8) and the shock absorber (81) of the same and also to a bracing piece (4), forming, along with the outer supports (2), means for coupling each axle (8), with the corresponding suspension (81) thereof;
- a bracing piece (4), mounted transversely to the respective longitudinal members (1), in the area where each axle (8) of the tank is mounted, formed by a deep drawn piece which has a series of holes through which it is screwed laterally in the outer (2) and inner (3) supports, making up stiffening means to distribute the stresses from one side of the chassis to the other.

2. The chassis, according to claim 1, **characterised in that** the outer supports (2), mounted on the outer face of the respective longitudinal members (1), provide support below the upper base of the Z-shaped profile of each longitudinal member (1).

3. The chassis, according to any of the preceding claims, **characterised in that** the inner supports (3) are attached below the lower base of the Z-shaped profile of each longitudinal member (1).

4. The chassis, according to any of the preceding claims, **characterised in that** the support pieces (2) and (3) of the axle (8) and of the shock absorber (81) are made by deep drawing and have several folds to increase the rigidity of the assembly; also having several openings through which they are screwed to the longitudinal member (1) and the corresponding bracket (5) and to a bracing piece (4) that stiffens the chassis.

5. The chassis, according to any of the preceding claims, **characterised in that** the bracing piece (4) between both longitudinal members (1) is made by deep drawing and has several folds to increase the rigidity of the assembly and has several openings through which it is screwed to both supports (2) and (3) of the respective sides of the tank (7).

6. The chassis, according to any of the preceding claims, **characterised in that** at the front of the same it is extended by a sub-chassis, formed by C-shape folded profile pieces which are screwed to the main chassis, which house at the ends thereof the first brackets of the tank (51) and the support feet of the tank at the times when it is stationary and separated from the road tractor.

7. The chassis, according to any of the preceding claims, **characterised in that** the pieces thereof are made of stainless steel, carbon steel or aluminium.

## Patentansprüche

1. Ein modulares Fahrgestell für Sattelanhänger und starre Tanks, auf dem die Achsen (8) der Räder des Tanks (7) montiert sind und auf dem eine Reihe von Halterungspaaren (5) ruht, um das Gewicht des Tanks zu tragen ( 7), **umfassend:**
- Längsträger (1), die das Übergangsstück für die Beanspruchungen des Tanks zu den Stützen (2, 3) des Fahrgestells bilden, gebildet durch ein Z-förmig gefaltetes Profil, die an den jeweiligen Seiten einander gegenüberliegend montiert sind, so dass die obere Basis des Profils nach außen gerichtet ist und somit die untere Basis dieses Profils zum Inneren des Tanks orientiert ist, der eine Reihe von Löchern aufweist, die zum Verschrauben der Elemente geeignet sind, die das Fahrgestell bilden;
- Halterungen (5), montiert an den jeweiligen Längsträgern (1);
- äußere Stützen (2), die an der Außenseite der jeweiligen Längsträger (1) montiert sind, wobei das modulare Fahrgestell **dadurch gekennzeichnet ist, dass**:
- die Halterungen stimmen mit jeder Achse (8) des Tanks überein, die an der unteren äußeren Ecke eine angeschweißte Z-förmig gefaltete Platte (52) mit ähnlichen Abmessungen wie die der Längsträger (1) hat, die mit mehreren Löchern versehen ist, geeignet um sie mit den Längsträgern (1) und den Stützen (2, 3) des Fahrgestells zu verschrauben;
- die äußeren Stützen sind in dem Bereich montiert, in dem jede Achse (8) des Tanks montiert ist, gebildet durch ein tiefgezogenes Stück, versehen mit einer Reihe von Löchern, mittels welcher sie mit den Längsträgern (1) und der Halterung (5), an der Achse (8) und dem Stoßdämpfer (81) derselben sowie an einem Verstrebungsstück (4) verschraubt sind, das zusammen mit den inneren Stützen (3) Mittel zum Koppeln jeder Achse (8) bildet, mit der entsprechenden Aufhängung (81) davon;
- innere Stützen (3), montiert an der unteren Basis der jeweiligen Längsträger (1), in dem Bereich, wo jede Achse (8) des Tanks montiert ist, gebildet durch ein tiefgezogenes Stück, das eine Reihe von Löchern aufweist, mittels welcher sie mit den Längsträgern (1) und der Halterung (5), mit der Achse (8) und dem Stoßdämpfer (81) derselben sowie mit einem Verstrebungsstück (4) verschraubt sind, das zusammen mit den äußeren Stützen (2) Mittel zum Koppeln jeder Achse (8) bildet, mit der entsprechenden Aufhängung (81) davon;
- ein quer zu den jeweiligen Längsträgern (1) montiertes Verstrebungsstück (4) in dem Bereich, wo jede Achse (8) des Tanks montiert ist, gebildet durch ein tiefgezogenes Stück, das eine Reihe von Löchern aufweist, durch die es seitlich in die äußeren (2) und inneren (3) Stützen verschraubt ist, die Versteifungsmittel bilden, um die Beanspruchungen von einer Seite des Fahrgestells auf die andere zu verteilen.

2. Fahrgestell nach Anspruch 1, **dadurch gekennzeichnet, dass** die an der Außenseite der jeweiligen Längsträger (1) montierten äußeren Stützen (2) eine Stütze unterhalb der oberen Basis des Z-förmigen Profils jedes Längsträgers (1) bereitstellen.

3. Fahrgestell nach einem der vorhergehenden Ansprüche, **dadurch gekennzeichnet, dass** die inneren Stützen (3) unterhalb der unteren Basis des Z-Profils jedes Längsträgers (1) befestigt sind.

4. Fahrgestell nach einem der vorhergehenden Ansprüche, **dadurch gekennzeichnet, dass** die Stützteile (2) und (3) der Achse (8) und des Stoßdämpfers (81) durch Tiefziehen hergestellt sind und mehrere Falten aufweisen, um die Steifigkeit der Anordnung zu erhöhen; ebenfalls mehrere Öffnungen aufweisen, durch die sie mit dem Längsträger (1) und der entsprechenden Halterung (5) sowie einem das Fahrgestell versteifenden Verstrebungsstück (4) verschraubt sind.

5. Fahrgestell nach einem der vorhergehenden Ansprüche, **dadurch gekennzeichnet, dass** das Verstrebungsstück (4) zwischen beiden Längsträgern (1) durch Tiefziehen hergestellt ist und mehrere Falten aufweist, um die Steifigkeit der Anordnung zu erhöhen, und mehrere Öffnungen aufweist, durch die es mit beiden Stützen (2) und (3) der jeweiligen Seiten des Tanks (7) verschraubt ist.

6. Fahrgestell nach einem der vorhergehenden Ansprüche, **dadurch gekennzeichnet, dass** es an der Vorderseite desselben durch ein Unter-Fahrgestell verlängert ist, das aus C-förmig gefalteten Profilstücken besteht, die mit dem Haupt-Fahrgestell verschraubt sind, das an den Enden davon die ersten Halterungen des Tanks (51) und die Stützfüße des Tanks unterbringt, wenn es stationär und von der Zugmaschine getrennt ist.

7. Fahrgestell nach einem der vorhergehenden Ansprüche, **dadurch gekennzeichnet, dass** die Teile davon aus rostfreiem Stahl, Kohlenstoffstahl oder Aluminium hergestellt sind.

## Revendications

1. Châssis modulaire pour citernes semi-remorques et rigides, sur lequel sont montés les essieux (8) des roues de la citerne (7), et sur lequel repose une série de paires de goussets (5) pour supporter le poids de la citerne (7), **comprenant** :
- des longerons (1) constituant la pièce de transition des efforts de la citerne aux supports (2, 3) du châssis, formés par un profilé plié en Z, qui sont montés à l'opposé l'un de l'autre sur les côtés respectifs, de telle sorte que la base supérieure dudit profilé est située vers l'extérieur et, par conséquent, la base inférieure de ce profilé est orientée vers l'intérieur de la citerne, qui comportent une série de trous appropriés pour visser les éléments qui composent le châssis ;
- des goussets (5), montés sur les longerons (1) respectifs ;
- des supports extérieurs (2), montés sur la face extérieure des longerons (1) respectifs, le châssis modulaire étant **caractérisé en ce que** :
- les goussets coïncident avec chaque essieu (8) de la citerne, qui comportent sur leur coin extérieur inférieur une plaque pliée en Z (52) soudée avec des dimensions semblables à celles des longerons (1), munie de plusieurs trous appropriés pour les visser auxdits longerons (1) et aux supports (2, 3) du châssis ;
- les supports extérieurs sont montés dans la zone où est monté chaque essieu (8) de la citerne, formés par une pièce emboutie, munie d'une série de trous au moyen desquels ils sont vissés aux longerons (1) et aux goussets (5), à l'essieu (8) et à l'amortisseur (81) de celle-ci ainsi qu'à une pièce de contreventement (4), formant, avec les supports intérieurs (3), des moyens pour coupler chaque essieu (8), à la suspension correspondante (81) de celui-ci ;
- des supports intérieurs (3), montés sur la base inférieure des longerons (1) respectifs, dans la zone où est monté chaque essieu (8) de la citerne, formés par une pièce emboutie qui comporte une série de trous au moyen desquels ils sont vissés aux longerons (1) et au gousset (5), à l'essieu (8) et à l'amortisseur (81) de celle-ci ainsi qu'à une pièce de contreventement (4), formant, avec les supports extérieurs (2), des moyens pour coupler chaque essieu (8), à la suspension correspondante (81) de celui-ci ;
- une pièce de contreventement (4), montée transversalement aux longerons (1) respectifs, dans la zone où est monté chaque essieu (8) de la citerne, formée par une pièce emboutie qui comporte une série de trous à travers lesquels elle est vissée latéralement sur les supports extérieur (2) et intérieur (3), constituant des moyens de rigidification pour répartir les efforts d'un côté à l'autre du châssis.

2. Châssis, selon la revendication 1, **caractérisé en ce que** les supports extérieurs (2), montés sur la face extérieure des longerons (1) respectifs, fournissent un appui sous la base supérieure du profilé en Z de chaque longeron (1).

3. Châssis, selon quelconque des revendications précédentes, **caractérisé en ce que** les supports intérieurs (3) sont fixés sous la base inférieure du profil en Z de chaque longeron (1).

4. Châssis, selon quelconque des revendications précédentes, **caractérisé en ce que** les pièces de support (2) et (3) de l'essieu (8) et de l'amortisseur (81) sont réalisées par emboutissage profond et comportent plusieurs plis pour augmenter la rigidité de l'ensemble ; comportant également plusieurs ouvertures à travers lesquelles elles sont vissées au longeron (1) et au gousset (5) correspondant et à une pièce de contreventement (4) qui rigidifie le châssis.

5. Châssis, selon quelconque des revendications précédentes, **caractérisé en ce que** la pièce de contreventement (4) entre les deux longerons (1) est réalisée par emboutissage profond et comporte plusieurs plis pour augmenter la rigidité de l'ensemble et comporte plusieurs ouvertures à travers lesquelles elle est vissée aux deux supports (2) et (3) des côtés respectifs de la citerne (7).

6. Châssis, selon quelconque des revendications précédentes, **caractérisé en ce qu'**il est prolongé à l'avant par un sous-châssis, formé par des profilés pliés en C qui sont vissés au châssis principal, qui logent à leurs extrémités les premiers goussets de la citerne (51) et les pieds de support de la citerne lorsque celle-ci est à l'arrêt et séparée du camion tracteur.

7. Châssis, selon quelconque des revendications précédentes, **caractérisé en ce que** les pièces de celui-ci sont fabriquées en acier inoxydable, en acier au carbone ou en aluminium.
